# EUROPEAN PATENT APPLICATION

(11) **EP 1 016 976 A2**
(43) Date of publication of application: **05.07.2000**
(21) Application number: 99204574.0
(22) Date of filing: 27.12.1999
(51) Int. Cl.: G06F 15/02

(54) **Method and device for distributing messages and appliance used thereby**

(30) Priority: 29.12.1998 BE 9800937
(71) Applicant: Minds, N.V., 3511 Hasselt-Kuringen (BE)
(72) Inventor: Orens, Guy, 3511 Hasselt-Kuringen (BE)
(74) Representative: Donné, Eddy

(57) **Abstract**

Method for distributing messages, characterised in that it consists in the use of a portable appliance (2) which contains at least a display unit (6), a storage device (7) which is either or not interchangeable for the electronic storage of data and a number of control means (8); the distribution of the messages (4) in the form of data which can be gathered in the appliance (2); the gathering of these data in the appliance (2); and the visible representation of the messages (4) on the display unit (6).

## Description

The present invention concerns a method and a device for distributing messages, as well as an appliance used thereby.

In particular, the invention concerns a method and a device for distributing newspaper reports and such without any paper being required, such that all the concomitant disadvantages, such as the relatively slow printing procedure, the high cost price of the paper, the high cost price for the distribution of conventional newspapers and such, are excluded.

To this end, the invention in the first place concerns a method for distributing messages, characterised in that it consists in the use of a portable appliance which contains at least a display unit, a storage device which is either or not interchangeable for the electronic storage of data, and a number of control means; the distribution of the messages in the form of data which can be gathered in the appliance; the gathering of these data in the appliance; and the visible representation of the messages on the display unit.

By making use of a portable appliance, this appliance can be easily carried by the user to any location whatsoever and it can be consulted at any suitable moment, just like a newspaper. As the data are consulted in a mere electronic manner, the disadvantages of the conventional use of paper are excluded.

Preferably, an appliance will be used which basically only allows for a one-way communication for the exchange of data, by which is meant that the appliance basically only allows the messages to be read, whereas the data cannot be processed, nor can be sent back, possibly to the exclusion of a number of identification data, for example for executing an automatic payment for the supply of the data or such.

In particular, use is preferably made of an appliance which is designed as a 'reading unit', in other words which basically only contains control means to call the above-mentioned data and make them visible. Consequently, the design of the appliance can be kept particularly simple, as no entire keyboard is required and a number of control keys may suffice.

In case a display unit is used which consists of a touch-sensitive screen, the control keys can be entirely or almost entirely omitted.

According to the invention, the messages, in particular the data, can be distributed in several ways.

According to a first embodiment of the invention, this is realised by the distribution of interchangeable data carriers which can be inserted in the portable appliance, such as magnetic disks or such. These disks are for example provided daily with data and are supplied to the users in a conventional manner. The disks whose data have become out of date can be recycled.

According to another embodiment of the invention, the messages are distributed by means of load stations, in particular publicly accessible load stations. By these load stations are understood units with which the data can be delivered to the users, normally at a charge. The delivery can hereby take place as a data carrier supplied by the user, such as a diskette, is provided with recent data, after which the user immediately gets this data carrier back and can insert it in the portable appliance. It is also possible to supply the data directly to the appliance, in which said data can then be stored, either or not on an interchangeable data carrier.

The load station may consist of a unit which is permanently accessible to everyone and where anyone can consult recent data. Such a unit can for example be compared to an automatic teller machine, whereby instead of money, data are delivered which are stored on the above-mentioned data carrier or in the above-mentioned appliance. The user can hereby be identified by means of data put in by himself and/or by means of automatic identification via data situated on the data carrier and/or in the appliance, so as to obtain an automatic settlement of the costs.

Instead of an automatic settlement via data which are put in by the user at that particular moment, the whole may also be linked to a parent system which makes use of a credit card, what is called a pin card (proton card), coins, or such.

According to another embodiment, such a load station will consist of a unit which is for example available in certain shops, for example news stalls, whereby the owner of the shop can supply the above-mentioned data at a charge.

According to a particular embodiment, a wireless data exchange is provided according to the invention between such an appliance and a fixed unit. The whole in this case contains a send/receive device, preferably having a small range, such that the user can position himself/herself in the vicinity of the load station with the portable appliance and can request, by putting in a number of commands, for the data to be delivered to his appliance.

According to a special embodiment, the messages are distributed via an on-line network, internet or such, whereby they are stored either directly or indirectly in the above-mentioned appliance as of a computer which is connected to such a network. This enables the user, if he is connected to such a network, to gather recent data in the morning and to store them in the memory or on the data carrier of his portable appliance, after which he can take along the appliance during the day in place of an ordinary newspaper.

It is clear that, according to a variant, the above-mentioned data can also be distributed via a network and modems which are specifically used to this end, installed at the users of the above-mentioned appliances. According to a practical embodiment, use is made of a television distribution network as the above-mentioned network.

According to a special characteristic of the invention, the data exchange is secured by means of a unique code, whereby use is preferably made of an encryption system which is based on the use of what are called a public and private key. By using such a unique code, it becomes possible to connect a large number of users to the device, whereby it is difficult to steal the codes as they change permanently. Also, it is extremely difficult to obtain data in a wrongful way without having paid for them.

Preferably, the invention will be used for the distribution of news reports. According to the invention, these news reports are preferably represented on the display unit in a similar way as in a newspaper.

It is clear, however, that the invention is not restricted to such an 'electronic newspaper', and that it can also be used for the distribution of other message forms, for example for all sorts of information, publicity, etc.

The invention also concerns a device which is characterised in that it at least consists of at least one portable device on the one hand, having at least a display unit, means for the electronic data storage and a number of control means to call the data on the display unit; and means for distributing the messages in the form of data on the other hand which can be collected in the appliance.

This appliance preferably contains control means which basically only allow for the above-mentioned data to be read.

The means for the electronic data storage preferably consist of a holder, in particular what is called a 'disk drive' and a reading head, for receiving an interchangeable data carrier and for reading the data which are stored on this data carrier.

According to a practical embodiment, the portable appliance has a display unit whose dimensions are at least 15 x 15 cm, so that one has a good overview of the data represented.

The control means preferably have one or several of the following means:
- selection means, such as what is called a 'browser' function, so as to easily trace the required information, whereby it should be noted that this is much easier now than in the case of a conventional newspaper;
- means for changing the size of the represented messages, such that the user can determine himself in what size the messages should be represented, which is among others very practical for partially sighted persons who find it difficult to read small print;
- means for shifting the data represented on the display unit, such that one can so to say move over an entire page.

It is clear that the invention also concerns the portable appliance itself.

In order to better explain the characteristics of the invention, the following preferred embodiments are described as an example only without being limitative in any way, with reference to the accompanying drawings, in which:
figure 1 schematically represents a device according to the invention;
figure 2 represents the use of the portable appliance from the device in figure 1;
figure 3 represents a variant of figure 1;
figure 4 represents another variant.

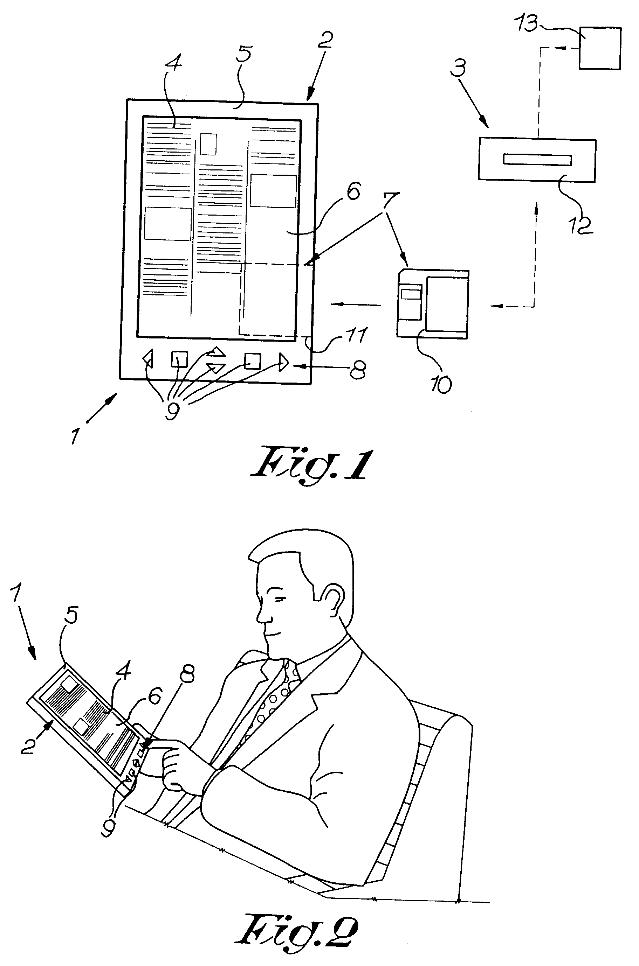

As is represented in figure 1, the device 1 according to the invention basically consists of at least one portable appliance 2 on the one hand, and of means 3 for distributing messages 4 in the form of data on the other hand which can be gathered in the appliance 2.

The portable appliance 2 contains at least a housing 5, a display unit 6, means 7 for the electronic storage of the above-mentioned data, and a number of control means 8 to call the data, in other words the messages 4, on the display unit 6.

The housing 5 is preferably relatively flat.

The display unit 6 preferably consists of an LCD-screen, but naturally it may be any other type of screen whatsoever which is suitable to visually represent the above-mentioned data.

There are preferably few control means 8. In the given example, they consist of a number of control keys 9 for calling the required messages and for manipulating the image represented on the screen.

The means 7 in this case consist of a data carrier in the form of a diskette 10 and what is called a disk drive 11 to read the data from the above-mentioned diskette 10.

In the example of figure 1, the means 3 for distributing the messages consist of a unit 12 in which the data can be loaded on the data carrier or the diskette 10. As mentioned in the introduction, this unit can be of any sort of nature and it may for example consist of a load station which is publicly accessible and which is possibly linked, for example via a network, to a central unit 13 which is for example installed at the editorial office of a publishing house.

The working and the use are as follows.

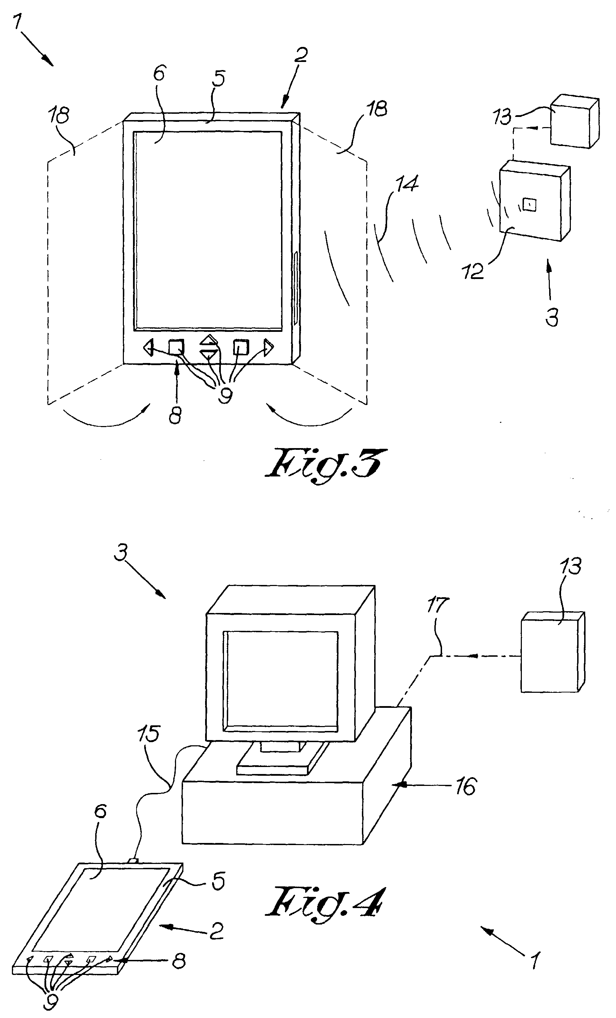

New reports are written daily which are transformed in electronic data and which are distributed from the central unit 13 to different units 12. On the site of these units 12, a diskette 10 of a user can be loaded with the new data. By subsequently inserting the diskette 10 in an appliance 2, the reports can be consulted at any time whatsoever, as is represented in figure 2.

It is clear that, according to a variant, the diskettes 10, just like newspapers, can also be distributed daily.

Figure 3 represents a variant whereby the unit 12 and the appliance 2 contain send/receive means which make it possible to provide for a wireless connection 14 via which the above-mentioned data can be gathered in the appliance 2.

Figure 4 represents a variant whereby the information is collected daily via a connection 15 with a personal computer 16 which is connected to for example a base station 13 via a network 17.

It is clear that the above-mentioned housing 5 can be made in all sorts of variants. Thus, it may for example be provided with a cover 18 which can be closed, as schematically represented in figure 3, to protect the display unit 6 when the appliance 2 is not being used.

The invention is by no means limited to the above-described embodiments represented in the accompanying drawings; on the contrary, the above-mentioned method, device and appliance can be made in all sorts of variants while still remaining within the scope of the invention.

## Claims

1. Method for distributing messages, characterised in that it consists in the use of a portable appliance (2) which contains at least a display unit (6), a storage device (7) which is either or not interchangeable for the electronic storage of data and a number of control means (8); the distribution of the messages (4) in the form of data which can be gathered in the appliance (2); the gathering of these data in the appliance (2); and the visible representation of the messages (4) on the display unit (6).

2. Method according to claim 1, characterised in that the above-mentioned appliance (2) only allows for a one-way communication for the exchange of data.

3. Method according to claim 1 or 2, characterised in that the above-mentioned appliance (2) is used as a 'reading unit' and basically exclusively contains control means (8) for calling and representing the above-mentioned data.

4. Method according to any of the preceding claims, characterised in that the messages (4) are distributed by means of interchangeable data carriers which can be inserted in the appliance (2), such as magnetic disks or such.

5. Method according to any of claims 1 to 3, characterised in that the messages (4) or data are distributed by means of publicly accessible units (12) or load stations.

6. Method according to claim 5, characterised in that during the distribution via the above-mentioned load stations, there is a direct data exchange between an appliance (2) and a load station.

7. Method according to claim 6, characterised in that the data exchange is carried out wireless.

8. Method according to claim 5, characterised in that during the distribution via the above-mentioned load stations, an indirect data exchange is provided for between an appliance (2) and a load station by means of a data carrier, such as a diskette (10) which is provided with the data concerned on the load station, which data carrier has to be inserted in the appliance (2) in order to make the data visible.

9. Method according to any of the preceding claims, characterised in that the messages (4) are distributed via an on-line network, internet or such, whereby they are stored either directly or indirectly in the above-mentioned appliance (2) as of a computer (16) which is connected to such a network.

10. Method according to any of claims 1 to 4, characterised in that the data are distributed via a network and modems which are specifically used to this end, installed at the users of the above-mentioned appliances (2).

11. Method according to claim 10, characterised in that use is made of a television distribution network as the above-mentioned network.

12. Method according to any of claims 5 to 11, characterised in that the data exchange is secured by means of a unique code, whereby use is preferably made of an encryption system which is based on the use of what are called a public and a private key.

13. Method according to any of the preceding claims, characterised in that it is used for distributing news reports.

14. Method according to claim 12, characterised in that the news reports are represented on the display unit (6), just like in a newspaper.

15. Device for distributing messages, in particular according to the method of one or several of the preceding claims, characterised in that it at least consists of at least one portable device (2) on the one hand, having at least a display unit (6), means (7) for the electronic data storage and a number of control means (8) to call the data on the display unit (6); and means (3) for distributing the messages (4) in the form of data on the other hand which can be collected in the appliance (2).

16. Device according to claim 15, characterised in that the portable appliance (2) contains control means (8) which basically only allow for the above-mentioned data to be read.

17. Device according to claim 15 or 16, characterised in that the means (7) for the electronic data storage consist of a holder (11) for an interchangeable data carrier.

18. Device according to any of claims 15 to 17, characterised in that the means (3) for distributing the messages (4) in the form of data which can be collected in the portable appliance (2) consist of public loading stations (12).

19. Device according to claim 18, characterised in that the means (3) for distributing the messages (4) in the form of data which can be collected in the portable appliance (2) contain at least a wireless send/receive device, preferably having a small range.

20. Device according to any of claims 15 to 19, characterised in that the portable appliance (2) has a display unit (6) whose dimensions are at least 15 x 15 cm.

21. Device according to any of claims 15 to 20, characterised in that the control means (8) contain one or several of the following means:
- selection means, such as what is called a 'browser' function;
- means for changing the size of the represented messages;
- means for shifting the data represented on the display unit.

22. Portable appliance for realising the device according to any of claims 15 to 21, characterised in that this appliance has one or several of the characteristics described in these claims.
